# EUROPÄISCHE PATENTSCHRIFT

(11) **EP 2 754 545 B1**
(45) Veröffentlichungstag und Bekanntmachung des Hinweises auf die Patenterteilung: **23.03.2016**
(21) Anmeldenummer: 14150962.0
(22) Anmeldetag: 13.01.2014
(51) Int. Cl.: B29C 49/68, B29C 49/06, B29C 49/64

(54) **Vorrichtung zum Erwärmen von Kunststoffvorformlingen mit demontierbarer Lüftungsabschirmung**
Device for heating plastic pre-forms with removable ventilation shielding
Dispositif de chauffage d'ébauches en matière synthétique doté d'un déflecteur de ventilation démontable

(30) Priorität: 15.01.2013 DE 102013100390
(43) Veröffentlichungstag der Anmeldung: 16.07.2014
(73) Patentinhaber: Krones AG, 93073 Neutraubling (DE)
(72) Erfinder: Lappe, Ulrich, 93073 Neutraubling (DE)
(74) Vertreter: Bittner, Bernhard

(56) Entgegenhaltungen:
- EP-A1- 0 564 354
- WO-A1-01/49075
- FR-A1- 2 863 931

## Beschreibung

Die vorliegende Erfindung bezieht sich auf eine Vorrichtung zum Erwärmen von Kunststoffvorformlingen. Derartige Vorrichtungen sind aus dem Stand der Technik seit langem bekannt. In der Getränke herstellenden Industrie ist es üblich geworden, Kunststoffflaschen zu fertigen, wobei hierzu Kunststoffvorformlinge durch einen Ofen, insbesondere einen Infrarotofen, laufen und anschließend in diesem erwärmten Zustand in einer nachfolgenden Blasmaschine, insbesondere einer Streckblasmaschine, durch Beaufschlagung mit Blasluft zu den Kunststoffbehältnissen umgeformt werden. Dabei müssen derartige Öfen die jeweiligen Kunststoffvorformlinge sehr präzise und auf eine genau definierte Temperatur erwärmen.

Eine solche Vorrichtung ist beispielsweise aus der EP-A-0564354 bekannt. Auch ist es hierbei bekannt, dass Infrarotstrahler die Kunststoffvorformlinge aufheizen und dass dabei die Strahlung von Rückenreflektoren sowie auch von Gegenreflektoren, die auf der jeweils gegenüber liegenden Seite der Infrarotstrahler in Bezug auf den Transportpfad der Kunststoffvorformlinge liegen, reflektiert wird. Derartige Reflektoren bestehen dabei beispielsweise aus Keramik. Dabei ist es auch denkbar, dass zwischen diesen beschriebenen Reflektoren eine diffuse Mehrfachreflektion auftritt. Die langwelligen Anteile der Infrarotstrahlung können dabei jedoch nur schlecht in das Material der Kunststoffvorformlinge, beispielsweise PET, eindringen. Dies bedeutet, dass sich die Oberfläche der Kunststoffvorformlinge schneller aufheizt als tiefer liegende Materialebenen. Insbesondere bei Kunststoffvorformlingen mit einer größeren Materialstärke kann dies dazu führen, dass deren Oberflächen durch die langwelligen Strahlungsanteile zu stark aufgeheizt werden, die tiefer liegenden Bereiche der Kunststoffvorformlinge hingegen nicht ausreichend erwärmt werden. Um somit die tiefer liegenden Bereiche der Kunststoffvorformlinge ausreichend erwärmen zu können, gleichzeitig aber die Außenoberfläche der Vorformlinge vor Überhitzung und der damit verbundenen Kristallisation zu vermeiden, ist es aus dem Stand der Technik der Anmelderin bekannt, dass die Vorformlinge während des Erhitzungsverfahrens gekühlt werden.

Daneben ist es zumindest aus dem internen Stand der Technik der Anmelderin bekannt, eine Oberflächenkühlung der Kunststoffvorformlinge zu verwenden, die verhindert, dass die Oberfläche der Kunststoffvorformlinge derart überhitzt, dass eine sogenannte thermische Kristallisation an den Kunststoffvorformlingen stattfindet. Diese Oberflächenkühlung der Kunststoffvorformlinge bringt jedoch den Nachteil mit sich, dass oft mehr Luft auf die Kunststoffvorformlinge geblasen wird, als eigentlich nötig, um dem obigen Effekt entgegenzuwirken. Dies verschlechtert jedoch die Energieeffizienz des Ofens, da gleichzeitig geheizt und gekühlt wird.

Untersuchungen der Anmelderin haben gezeigt, dass durch Weglassen dieser Oberflächenkühlung bei bestimmten Vorformlingen sehr deutliche energetische Einsparungen zu erreichen sind. Falls jedoch auf diese Kühlung verzichtet wird, das heißt, wenn kein Luftstrom in dem Ofen auftritt, heizt sich dieser nach und nach immer weiter auf. Dies bedeutet, dass auf der einen Seite Probleme mit den Materialien, wie etwa eine Beschädigung durch zu hohe Temperatur auftreten und andererseits die Prozessstabilität nicht mehr gewahrt werden kann, da sich die Erwärmung innerhalb des Ofens bzw. dessen Eigenzustand permanent ändert.

Der vorliegenden Erfindung liegt daher die Aufgabe zugrunde, eine Vorrichtung und ein Verfahren zum Erwärmen von Kunststoffvorformlingen zur Verfügung zu stellen, welche auf unterschiedliche Gattungen von Vorformlingen anwendbar sind und welche gleichwohl in jedem Falle eine gleichmäßige Erwärmung der Kunststoffvorformlinge ermöglichen. Eine weitere Aufgabe der Erfindung ist die Steigerung der energetischen Effizienz einer Blasmaschine, insbesondere deren Erwärmungsvorrichtung. Diese Aufgaben werden erfindungsgemäß durch die Gegenstände der unabhängigen Ansprüche erreicht.

Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung auf, welche die Kunststoffvorformlinge entlang eines vorgegebenen Transportpfads transportiert. Weiterhin weist die Vorrichtung wenigstens ein Heizelement auf, welches entlang des Transportpfades der Kunststoffvorformlinge angeordnet ist und welches die Kunststoffvorformlinge erwärmt. Weiterhin weist die Vorrichtung eine Kühleinrichtung auf, welche die Kunststoffvorformlinge und/oder wenigstens ein Element bzw. einen

Bereich der Vorrichtung während der Erwärmung der Kunststoffvorformlinge durch Beaufschlagung mit einem gasförmigen Medium konvektiv kühlt.

Erfindungsgemäß ist der Strömungspfad dieses gasförmigen Mediums derart veränderbar, dass es in einer ersten vorgegebenen Weise bezüglich der Außenoberfläche der zu erwärmenden Kunststoffvorformlinge bzw. auf eine Außenoberfläche der zu erwärmenden Kunststoffvorformlinge (während deren Erwärmung) führbar ist und es in einer zweiten vorgegebenen Weise, welche sich von der ersten vorgegebenen Weise unterscheidet, ebenfalls bezüglich der Außenoberfläche der Kunststoffvorformlinge führbar ist, wobei sich die erste und zweite vorgegebene Weise zumindest hinsichtlich des auf die Außenoberfläche gelangenden Volumenstroms unterscheiden. Dabei ist es beispielsweise möglich, dass durch das Anbringen des Zwischenblechs der Luftstrom auf den Preform im Wesentlichen komplett unterbunden wird.

Es wird daher erfindungsgemäß vorgeschlagen, dass das zur Kühlung vorgesehene gasförmige Medium, bei dem es sich insbesondere um Luft bzw. dessen Strömung handelt, derart verändert werden kann, dass geringere oder größere Volumenanteile dieses gasförmigen Mediums auf die Außenoberfläche der Kunststoffvorformlinge gelenkt werden können. Vorteilhaft ist dabei eine Veränderung derart möglich, dass in wenigstens einem Zustand ein Auftreffen von Gas bzw. Luft auf die Außenoberfläche der Kunststoffvorformlinge im Wesentlichen vollständig verhindert werden kann. Bevorzugt handelt es sich bei den Heizelementen um Infrarotheizelemente, die insbesondere entlang des Transportpfades der Kunststoffvorformlinge angeordnet sein können. Es wäre jedoch auch eine Anwendung auf andere Gattungen von Öfen denkbar, wie insbesondere auf sogenannte STIR(selective transformed infrared)-Öfen.

Weiterhin ist vorteilhaft die Transporteinrichtung derart gestaltet, dass die Kunststoffvorformlinge zumindest abschnittsweise entlang eines geradlinigen Transportpfades transportiert werden. Vorteilhaft sind zwei derartige geradlinige Abschnitte vorgesehen, zwischen denen wiederum eine Umlenkung bevorzugt um 180° stattfinden kann. Damit sind diese beiden geradlinigen Abschnitte des Transportpfades vorteilhaft parallel zueinander angeordnet.

Vorteilhaft transportiert die Transporteinrichtung die Kunststoffvorformlinge vereinzelt. Bevorzugt transportiert die Transporteinrichtung die einzelnen Kunststoffvorformlinge mit einem gleichmäßigen Abstand zueinander. Vorteilhaft ist dabei auch eine Rotationseinrichtung vorgesehen, welche die Kunststoffvorformlinge während des Transports und während ihrer Erwärmung um deren Längsachse dreht. Dabei ist es möglich, dass jedem einzelnen Kunststoffvorformling ein eigener Antrieb, wie beispielsweise ein Servomotor, zugeordnet ist. Es wäre jedoch auch möglich, dass eine einheitliche Dreheinrichtung vorgesehen ist, wie beispielsweise durch einen Zahnradantrieb bzw. einen Zahnriemenantrieb. Bevorzugt weist die Transporteinrichtung eine umlaufende Transportkette auf, an der eine Vielzahl von Halteeinrichtungen zum Halten der Kunststoffvorformlinge angeordnet ist.

Bei einer weiteren vorteilhaften Ausführungsform weist die Vorrichtung eine Vielzahl von Halte- bzw. Greifeinrichtungen zum Halten der einzelnen Kunststoffvorformlinge auf. Vorteilhaft handelt es sich hierbei um Haltedorne, welche in die Mündungen der Kunststoffvorformlinge eingeführt werden.

Bei einer weiteren vorteilhaften Ausführungsform weist die Vorrichtung ein Strömungsleitelement auf, welches zum Leiten der besagten Gasströmung dient. Durch eine Relativbewegung dieses Strömungsleitelements gegenüber dem Transportpfad der Kunststoffvorformlinge ist eine Umstellung zwischen der einen vorgegebenen Weise und der zweiten vorgegebenen Weise möglich. Dies bedeutet, dass durch das Anordnen des Strömungsleitelement beispielsweise in einer Stellung, bei der es sich auch um eine vollständige Entfernung dieses Strömungsleitelements handeln kann, bewirkt wird, dass das gasförmige Medium auf die Kunststoffvorformlinge gelangt und in einer anderen Stellung (insbesondere durch das wenigstens teilweise Einfügen des Strömungsleitelements) eine Umleitung des gasförmigen Mediums wenigstens teilweise an den Kunststoffvorformlingen vorbei bewirkt wird.

Bei dieser Ausführungsform wird damit vorteilhaft ein Einbauteil zur Verfügung gestellt, welches in einen Bereich des Ofens eingebracht wird, beispielsweise vor ein Reflektorelement, insbesondere ein Reflektorelement, welches aus Sicht der Kunststoffvorformlinge auf der gegenüber liegenden Seite bezüglich der Heizelemente angeordnet ist, gestellt wird. Mit anderen Worten werden hier die Kunststoffvorformlinge zwischen den Heizelementen und dem Strömungsleitelement transportiert. Dabei ist es auch möglich, dass eine Aufhängeinrichtung vorgesehen ist, mittels der das Strömungsleitelement in den Ofen gehängt werden kann.

Damit wird der Gasstrom, insbesondere der Luftstrom, auf die einzelnen Kunststoffvorformlinge wenigstens teilweise und bevorzugt vollständig unterbunden. Dabei ist es möglich, dass dieses Einbauteil, insbesondere auch dessen Rückseite einen in einer Richtung und insbesondere nach unten offenen, ansonsten jedoch geschlossenen Hohlraum aufweist bzw. diesen Hohlraum mit einem weiteren Element, etwa einem Reflektor, ausbildet. Dieser Hohlraum kann dazu dienen, die aus den Reflektoren ausströmende Luft nach unten abzulenken, das heißt, um den Kunststoffvorformling herum. Damit strömt auch weiterhin Luft durch den Ofen, was zu konstanten Bedingungen führt. Gleichzeitig werden die Kunststoffvorformlinge nicht mehr an ihrer Oberfläche gekühlt. Dieses Vorgehen ist insbesondere dann vorteilhaft, wenn dünnwandige Kunststoffvorformlinge erwärmt werden sollen, da hier die langwellige Strahlung ausreicht, um den Vorformling durchgehend zu erwärmen.

Werden jedoch dickwandigere Kunststoffvorformlinge verwendet, können die besagten Strömungsleiteinrichtungen bzw. Einbauteile herausgenommen werden und die Oberflächenkühlung wird wieder genutzt, um die sehr dickwandigen Kunststoffvorformlinge an ihrer Oberfläche zu kühlen und somit die Kristallisation der Vorformlingsoberfläche zu verhindern. Damit ist es möglich, diese Strömungsleitelemente je nach den Erfordernissen ein- oder auszubauen. Bei sehr dünnwandigen Kunststoffvorformlingen wäre es auch möglich, den Heizkanal vollständig abzusperren. Vorteilhaft weist damit die Erwärmungseinrichtung einen Heizkanal bzw. Erwärmungskanal auf, durch welchen die Kunststoffvorformlinge während ihrer Erwärmung geführt werden.

Dabei ist es auch möglich, dass eine Unterseite dieses Heizkanals vollständig geschlossen ist. Dabei kann eine Breite dieser Strömungsleitelemente auch von der Kanalbreite des Heizkanals abhängen. Auf diese Weise wird eine optimale Nutzung der Heizenergie auch bei sehr dünnwandigen Kunststoffvorformlingen ermöglicht, insbesondere bei solchen dünnwandigen Kunststoffvorformlingen, bei denen keine oder eine nur geringe Oberflächenkühlung erforderlich ist. Auf diese Weise wird eine Energieoptimierung ermöglicht. Daneben besteht auch weiterhin die Möglichkeit, dickwandigere Kunststoffvorformlinge zu erwärmen. Daneben kann auch ein prozessstabiler Ofen aufrechterhalten werden, da dieser gleichmäßig nach wie vor von Luft durchströmt wird.

Daneben ist es auch möglich, ein derartiges Strömungsleitelement an bereits bestehende Heizeinrichtungen nachzurüsten, bzw. jeweils dann nachzurüsten, wenn andere Kunststoffvorformlinge erwärmt werden sollen. Daneben ist auch eine schnelle Umrüstung möglich.

Die vorliegende Erfindung ist damit weiterhin auf ein Strömungsleitelement gerichtet, welches in einer Vorrichtung zum Erwärmen von Kunststoffvorformlingen derart angeordnet werden kann, dass dieses Strömungsleitelement eine Beaufschlagung von Kunststoffvorformlingen mit Luft an deren Außenoberfläche im Wesentlichen vollständig verhindert. Dabei ist es denkbar, dass diese Strömungsleiteinrichtung in den Heizkanal einer derartigen Vorrichtung zum Erwärmen von Kunststoffvorformlingen eingehängt bzw. angeordnet wird.

Vorteilhaft erstreckt sich dieses Strömungsleitelement zumindest abschnittsweise auch in der Transportrichtung der Kunststoffvorformlinge. Insbesondere kann sich das Strömungsleitelement in Transportrichtung der Kunststoffvorformlinge über ein ganzes Erwärmungsmodul erstrecken. Vorteilhaft erstreckt sich dieses Strömungsleitelement wenigstens entlang der vollständigen Längsausdehnung der Kunststoffvorformlinge, jedoch bevorzugt mit Ausnahme deren Gewinde. Bei einer weiteren vorteilhaften Ausführungsform weist die Vorrichtung ein Abschirmelement auf, um einen Gewindebereich der Kunststoffvorformlinge während der Erwärmung abzuschirmen. Hierbei wird darauf hingewiesen, dass bei der Erwärmung derartiger Kunststoffvorformlinge üblicherweise der Gewindebereich ausgespart wird, da dieser bereits seine endgültige Form besitzt und in dem nachfolgenden Streckblasvorgang nicht mehr expandiert wird. Dabei ist es denkbar, dass sich eine Erwärmungseinrichtung aus einer Vielzahl von Erwärmungsmodulen zusammensetzt, die entlang des Transportpfades der Kunststoffvorformlinge insbesondere hintereinander angeordnet sind. Dabei können diese Erwärmungsmodule unterschiedliche oder gleiche Längen aufweisen. Auch ist es denkbar, dass die einzelnen Erwärmungseinrichtung unabhängig voneinander steuerbar sind und/oder unabhängig voneinander zu- bzw. abschaltbar sind.

Vorteilhaft ist die Strömungsleiteinrichtung als Abschirmblech ausgeführt.

Bei einer weiteren vorteilhaften Ausführungsform sind die Heizelemente lediglich an einer Seite bezüglich des Transportpfades der Kunststoffvorformlinge angeordnet. Dies bedeutet, dass die Kunststoffvorformlinge von den Heizelementen nur einseitig aktiv erwärmt werden und an der gegenüber liegenden Seite bevorzugt das oben erwähnt Reflektorelement angeordnet ist. Insbesondere durch die oben beschriebene Drehung der Kunststoffvorformlinge kann gleichwohl über den gesamten Transportpfad hinweg eine gleichmäßige Erwärmung der Kunststoffvorformlinge in deren Umfangsrichtung erreicht werden.

Bei einer weiteren vorteilhaften Ausführungsform weist die Vorrichtung einen Erwärmungskanal auf, durch den hindurch die Kunststoffvorformlinge während ihrer Erwärmung transportiert werden. Vorteilhaft erstreckt sich damit dieser Erwärmungskanal entlang des vollständigen Transportpfades der Kunststoffvorformlinge durch die Erwärmungseinrichtung. Bevorzugt weist damit die Erwärmungsvorrichtung Erwärmungselemente auf, welche die Kunststoffvorformlinge aktiv erwärmen und das Strömungsleitelement ist derart angeordnet, dass die Kunststoffvorformlinge wenigstens abschnittsweise zwischen diesen Erwärmungselementen und dem Strömungsleitelement transportiert werden.

Bei einer weiteren vorteilhaften Ausführungsform weist die Vorrichtung ein erstes Reflektorelement auf und die Kunststoffvorformlinge werden zwischen den Erwärmungselementen und diesem ersten Reflektorelement transportiert. Dies bedeutet, dass der oben erwähnte Erwärmungskanal auch durch die Position der Erwärmungselemente und die diesen bezüglich des Transportpfades der Kunststoffvorformlinge gegenüber liegenden Reflektorelementen definiert wird.

Vorteilhaft wird wenigstens das erste Reflektorelement von dem gasförmigen Medium gekühlt.

Bei einer weiteren vorteilhaften Ausführungsform weist die Vorrichtung eine Vielzahl von zweiten Reflektorelementen auf, die hinsichtlich des Transportpfades auf der gleichen Seite wie die Erwärmungselemente angeordnet sind. Diese Reflektorelemente bewirken, dass möglichst viel der von den Erwärmungselementen abgegebenen Heizstrahlung möglichst effektiv auf die Kunststoffvorformlinge gelangt.

Vorteilhaft ist die Strömungsleiteinrichtung bzw. das Strömungsleitelement derart ausgeführt, dass ein Anteil des Kühlgases unabhängig von dessen Stellung zumindest auch auf eine Oberfläche der Reflektorelemente gelangt. Wie erwähnt, kann es sich bei der Strömungsleiteinrichtung bevorzugt um ein Zwischenblech handeln, welches insbesondere in den Transportkanal der Kunststoffvorformlinge eingehängt werden kann. Bevorzugt kann das Strömungsleitelement auch derart ausgestaltet sein, dass eine Einstellung bzw. Veränderung des Abstands des Strömungsleitelements zum Kunststoffvorformling bzw. des Strömungsleitelements und den Reflektoren (insbesondere den Gegenreflektoren auf der gegenüberliegenden Seite der Rückenreflektoren) erreicht werden kann.

Bei einer weiteren vorteilhaften Ausführungsform weist wenigstens ein Reflektorelement Keramikkacheln auf.

Bei einer weiteren vorteilhaften Ausführungsform ist das Strömungsleitelement an wenigstens einer Oberfläche und insbesondere an einer den Kunststoffvorformlingen und auch den Heizelementen zugewandten Oberfläche derart ausgebildet, dass es infrarotes Licht mit einer Wellenlänge von mehr als 900 nm zu wenigstens 20%, bevorzugt zu wenigstens 40%, bevorzugt zu wenigstens 60% reflektiert. Vorteilhaft handelt es sich hierbei um Wellenlängen in einem Bereich mehr als 1000 nm, bevorzugt von mehr 1200 nm. In diesem Zusammenhang wird darauf hingewiesen, dass, wie oben erwähnt, das Strömungsleitelement in den Heizkanal eingeschoben bzw. eingehängt wird. Damit liegt ein großer Teil der Fläche dieses Strömungsleitelements vor dem besagten Reflektorelement. Auf diese Weise wäre es günstig, wenn das Strömungsleitelement auch die Funktion des Reflektorelements zumindest teilweise wahrnehmen kann. Vorteilhaft wird jedoch auch ein Bereich des Strömungsleitelements von dem Kühlgas beaufschlagt und insbesondere handelt es sich hierbei um eine von der hier erwähnten Oberfläche rückseitig abgewandte Oberfläche. Bevorzugt weist das Strömungsleitelement an der den Kunststoffvorformlingen zugewandten Oberfläche eine Beschichtung 18a auf, welche die obigen reflektierenden Eigenschaften bezüglich infraroter Strahlung aufweist.

Bei einer weiteren vorteilhaften Ausführungsform tritt das gasförmige Medium durch eine Querschnittsfläche wenigstens eines Reflektorelements hindurch und insbesondere durch eine Querschnittsfläche des Gegenreflektorelements, welches bezüglich der Heizelemente auf der gegenüber liegenden Seite des Transportpfades der Kunststoffvorformlinge angeordnet ist. So kann beispielsweise in dem Gegenreflektorelement eine Vielzahl von Öffnungen bzw. Bohrungen angeordnet sein, durch welche das besagte Kühlgas treten kann. Damit weist vorteilhaft das Kühlgas wenigstens eine Strömungsrichtung auf, bzw. einen Abschnitt in einer Richtung auf, der sich senkrecht zu einer Transportrichtung der Kunststoffvorformlinge erstreckt und/oder senkrecht zu einer Längsrichtung der Kunststoffvorformlinge erstreckt.

So wäre es möglich, dass ein Kanal zum Leiten des gasförmigen Mediums in dem besagten Reflektorelement angeordnet ist. Daneben sind jedoch bevorzugt mehrere derartiger Kanäle angeordnet, so dass eine gleichmäßige Kühlung des Reflektorelements erreicht wird. Durch die Anordnung einer Vielzahl derartiger Kanäle kann bei Abwesenheit des Strömungsleitelements auch eine gleichmäßige Kühlung der Vorformlingsoberfläche erreicht werden.

Die vorliegende Erfindung ist weiterhin auf ein Verfahren zum Erwärmen von Kunststoffvorformlingen gerichtet. Dabei werden die Kunststoffvorformlinge mit einer Transporteinrichtung entlang eines vorgegebenen Transportpfades transportiert und mit wenigstens einem Heizelement, welches entlang des Transportpfades der Kunststoffvorformlinge angeordnet ist, erwärmt. Weiterhin ist eine Kühleinrichtung vorgesehen, welche die Kunststoffvorformlinge und/oder wenigstens ein Element der Vorrichtung während der Erwärmung der Kunststoffvorformlinge durch Beaufschlagung mit einem gasförmigen Medium kühlt.

Erfindungsgemäß wird ein Strömungspfad des gasförmigen Mediums derart verändert, dass es in einer ersten vorgegebenen Weise bezüglich der Außenoberfläche der Kunststoffvorformlinge während deren Erwärmung geführt wird und es (infolge der Veränderung) in einer zweiten vorgegebenen Weise, welche sich von der ersten vorgegebenen Weise unterscheidet, bezüglich der Außenoberfläche der Kunststoffvorformlinge geführt wird, wobei sich die erste vorgegebene Weise und die zweite vorgegebene Weise zumindest hinsichtlich des auf die Außenoberfläche der Kunststoffvorformlinge gelangenden Volumenstroms bzw. der Menge des Kühlmediums unterscheiden.

Es wird daher auch verfahrensseitig vorgeschlagen, dass eine Änderung der Strömungswege des gasförmigen Mediums, insbesondere im Inneren der Heizvorrichtung bzw. des Heizkanals derart möglich ist, dass das Volumen bzw. die Menge des auf die Außenoberfläche der Kunststoffvorformlinge gelangenden Mediums verändert werden kann. Vorteilhaft wird eine derartige Änderung zwischen der ersten und der zweiten vorgegebenen Weise in Abhängigkeit von den zu erwärmenden Kunststoffvorformlingen geändert und insbesondere in Abhängigkeit von einer Wandungsstärke dieser Kunststoffvorformlinge.

Vorteilhaft wird bei einer vorgegebenen Weise das gasförmige Medium auch in einer Längsrichtung der Kunststoffvorformlinge an diesen vorbeigeleitet.

Bei einem weiteren vorteilhaften Verfahren wird eine Strömungsleiteinrichtung relativ zu dem Transportpfad der Kunststoffvorformlinge bewegt bzw. verstellt. Insbesondere wird zur Umstellung von der einen auf die andere Weise ein derartiges Strömungsleitelement in die Vorrichtung bzw. in einen Heizkanal der Vorrichtung eingeführt. Bevorzugt wird das Strömungsleitelement zur Umstellung entweder in einen Heizkanal der Kunststoffvorformlinge eingebaut oder aus diesem ausgebaut.

Weitere Vorteile und Ausführungsformen ergeben sich aus den beigefügten Zeichnungen.

Darin zeigen:
- Fig. 1: Eine schematische Darstellung einer erfindungsgemäßen Anordnung zur Herstellung von Kunststoffbehältnissen mit einer erfindungsgemäßen Erwärmungsvorrichtung; und
- Fig. 2: eine Ansicht einer erfindungsgemäßen Vorrichtung.

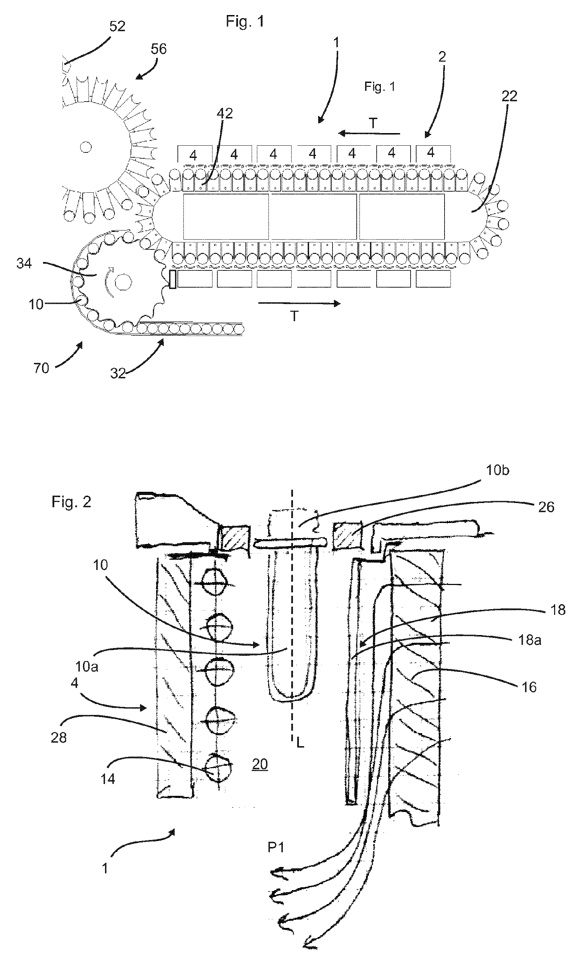

Fig. 1 zeigt eine Ansicht einer Anlage 70 zum Herstellen von Kunststoffbehältnissen. Dabei ist zunächst eine Zuführeinrichtung 32 vorgesehen, welche Kunststoffvorformlinge 10 einer erfindungsgemäßen Erwärmungsvorrichtung 1 zuführt. Das Bezugszeichen 34 bezeichnet dabei eine Vereinzelungsvorrichtung, wie beispielsweise einen Eintaktstern, der an seinem Außenumfang eine Vielzahl von Ausnehmungen aufweist, welche jeweils die Kunststoffvorformlinge 10 vereinzelt führen. Die erfindungsgemäße Vorrichtung 1 weist einen in ihrer Gesamtheit mit 2 bezeichneteTransporteinrichtung auf, welche die Kunststoffvorformlinge entlang ihres Transportpfades T führt.

Jeweils am Außenumfang dieses Transportpfades ist eine Vielzahl von Erwärmungseinrichtungen 4 in Reihe hintereinander angeordnet. Das Bezugszeichen 42 kennzeichnet ein Halteelement, welches zum Halten der einzelnen Kunststoffvorformlinge dient. Wie durch die kleinen Pfeile gezeigt, werden dabei die Kunststoffvorformlinge zusätzlich zu ihrer Bewegung entlang des Transportpfades T um ihre Längsrichtung gedreht. Das Bezugszeichen 22 kennzeichnet schematisch ein Umlenkrad, im Bereich dessen die Transportbewegung der Kunststoffvorformlinge um 180° umgelenkt wird und diese anschließend wieder rückgeführt werden.

Das Bezugszeichen 56 kennzeichnet ein Übergaberad, welches die nunmehr erwärmten Kunststoffvorformlinge übernimmt und an eine (nicht gezeigte) stromabwärts angeordnete Umformungseinrichtung zum Umformen von Kunststoffvorformlingen zu Kunststoffbehältnissen übergibt. Bei dieser Vorrichtung zum Umformen von Kunststoffvorformlingen zu Kunststoffbehältnissen handelt es sich bevorzugt um eine Streckblasmaschine, welche an einem beweglichen und insbesondere an einem drehbaren Träger angeordnete Vielzahl von Umformungsstationen 52 (nur teilweise erkennbar) aufweist. Diese Umformungsstationen weisen dabei jeweils Aufnahmeräume zum Aufnehmen der Kunststoffvorformlinge auf sowie Beaufschlagungseinrichtungen, wie beispielsweise Blasdüsen, welche durch Beaufschlagung mit Blasluft die Kunststoffvorformlinge zu den Kunststoffbehältnissen expandieren. Es ist jedoch auch denkbar, dass die Vorformlinge zwischen der Erwärmungsvorrichtung 1 und der Umformungseinrichtung eine weitere Vorrichtung, wie z.B. eine Sterilisationseinrichtung, durchlaufen, in welcher die Vorformlinge durch Beaufschlagung mit einem Sterilisationsmittel, wie z.B. Wasserstoffperoxid oder Peressigsäure, sterilisiert werden können.

Fig. 2 zeigt eine Schnittdarstellung der Erwärmungsvorrichtung 1 in Richtung des Transportpfades T. Dabei ist wiederum ein Kunststoffvorformling 10 dargestellt, der hier senkrecht zur Figurenebene transportiert wird. Das Bezugszeichen 10a kennzeichnet einen zu erwärmenden Grundkörper des Kunststoffvorformlings und das Bezugszeichen 10b eine Mündung des Kunststoffvorformlings, welche nicht erwärmt wird. Zu diesem Zweck weist die Vorrichtung eine Abschirmeinrichtung 26 auf, welche verhindert, dass auch der besagte Mündungsbereich 10b des Kunststoffvorformlings zu stark erwärmt wird. Die Erwärmungsvorrichtung 1 weist ein Heizelement 4 auf, welches hier eine Vielzahl von Erwärmungselementen 14 bzw. Heizstrahlern aufweist. Diese Heizstrahler 14 erstrecken sich hier vorteilhaft ebenfalls entlang der Transportrichtung der Kunststoffvorformlinge 10.

Das Bezugszeichen 28 kennzeichnet einen Rückenreflektor, der dazu dient, die Strahlung der Strahlungselemente bzw. Erwärmungselemente 14 auch auf den Kunststoffvorformling 10 zu richten. Es wäre jedoch anstelle dessen oder zusätzlich auch möglich, dass die einzelnen Strahlungselemente 14 jeweils (einzelne) Reflektoren aufweisen, welche die Strahlung auf den Kunststoffvorformling richten. Auch könnten derartige Reflektoren derart ausgestaltet sein, dass ein bestimmter Teil der Strahlung wieder auf das Strahlungselement 14 gerichtet wird, um dieses zusätzlich zu erwärmen. Wie in Fig. 2 gezeigt, sind auch Strahlungselemente 14 in einem Bereich unterhalb des Kunststoffvorformlings vorgesehen, damit insbesondere auch ein Bodenbereich des Kunststoffvorformlings effizient erwärmt werden kann. Auch sind die einzelnen Strahlungselemente 14 bevorzugt separat zu- und abschaltbar, um auf diese Weise beispielsweise eine Umstellung auf unterschiedlich lange Kunststoffvorformlinge 10 zu ermöglichen.

Das Bezugszeichen 16 kennzeichnet ein Reflektorelement, welches bezüglich des Transportpfades der Kunststoffvorformlinge 10 den Strahlungselementen 14 gegenüber liegt.

Das Bezugszeichen 18 kennzeichnet grob schematisch ein Strömungsleitelement, welches, wie oben erwähnt, in den in seiner Gesamtheit mit 20 bezeichneten Heizkanal für die Kunststoffvorformlinge 10 eingeführt werden kann. Wie durch die Pfeile P1 gezeigt, kann ein gasförmiges Medium und insbesondere Luft, welches zur Kühlung der Erwärmungsvorrichtung und/oder auch zur Kühlung der dickwandigen Kunststoffvorformlinge 10 dient, durch dieses Strömungsleitelement 18 an den Kunststoffvorformlingen 10 vorbeigeleitet werden. Gleichzeitig wird jedoch in dem Heizkanal 20 eine Strömung erzeugt, mit der gleichmäßige Temperaturbedingungen aufrechterhalten werden können.

Falls jedoch das Strömungsleitelement 18 aus dem Heizkanal entfernt wird, kann das gasförmige Medium unmittelbar auf die Außenoberfläche der Kunststoffvorformlinge gelangen und diese, wie eingangs erwähnt, zu kühlen. Das Entfernen des Strömungsleitelements 18 ist insbesondere dann vorteilhaft, wenn wie oben erwähnt dickwandigere Kunststoffvorformlinge in der Erwärmungsvorrichtung erwärmt werden sollen, damit eine gleichmäßige Durchwärmung gewährleistet werden kann, ohne, dass eine Kristallisation der Vorformlingsoberfläche stattfinden kann.

Vorteilhaft ist das Strömungsleitelement 18 in der Längsrichtung L der Kunststoffvorformlinge zumindest geringfügig länger, als die Kunststoffvorformlinge selbst, so dass sichergestellt wird, dass kein gasförmiges Medium auf die Außenoberfläche der Kunststoffvorformlinge gelangt. Es wäre daneben auch möglich, dass dieses Strömungsleitelement einen unteren (nicht gezeigten) gekrümmten Abschnitt aufweist, der beispielsweise um die Kunststoffvorformlinge herum gekrümmt ist. Auf diese Weise wäre es bei Bedarf oder auf Wunsch auch denkbar, dass die Kühlluft noch an den Kunststoffvorformlingen quer zu deren Längsrichtung vorbeigeleitet wird, ohne dabei auf die Kunststoffvorformlinge zu gelangen.

Da das Strömungsleitelement bzw. das Zwischenblech insbesondere bei dünnwandigen Kunststoffvorformlingen zum Einsatz kommt und bei diesen eine (billigere) langwellige Strahlung oft ausreicht, um die Wärme einzubringen, ist, wie oben erwähnt, die Oberfläche des Strömungsleitelements, welche den Kunststoffvorformlingen zugewandt ist, im langwelligen Infrarotbereich sehr gut reflektierend. Hierdurch unterscheidet sich das Strömungsleitelement bevorzugt von den derzeit verwendeten Reflektoreinrichtungen bzw. Kacheln. Insbesondere sollte für Wellenlängen über 1250 mm der Reflektionsgrad dieser Strömungsleiteinrichtung hoch bleiben. Das Bezugszeichen 18a bezieht sich auf eine Beschichtung, welche auf dem Strömungsleitelement 18 bzw. dessen Grundkörper angebracht ist, und welche die hier erwähnten Reflexionseigenschaften aufweist.

Dabei kann das Strömungsleitelement eine (nicht gezeigte) Montageeinrichtung aufweisen, etwa an einem Gehäuse des Erwärmungskanals angeordnet zu werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Erwärmungsvorrichtung
- 2: Transporteinrichtung
- 4: Erwärmungseinrichtungen/Heizelement
- 10: Kunststoffvorformling
- 10a: Grundkörper des Kunststoffvorformlings
- 10b: Mündung
- 14: Erwärmungselemente/Strahlungselemente
- 16: erstes Reflektorelement
- 18: Strömungsleitelement
- 18a: Beschichtung des Strömungsleitelements
- 20: Heizkanal
- 22: Umlenkrad
- 26: Abschirmeinrichtung
- 28: Rückenreflektor
- 32: Zuführeinrichtung
- 34: Vereinzelungsvorrichtung/Eintaktstern
- 42: Halteelement
- 52: Umformungsstation
- 56: Übergaberad
- 70: Anlage

- P1: Strömung der Kühlluft
- T: Transportpfad
- L: Längsrichtung

## Patentansprüche

1. Vorrichtung (1) zum Erwärmen von Kunststoffvorformlingen (10) mit einer Transporteinrichtung (2), welche die Kunststoffvorformlinge (10) entlang eines vorgegebenen Transportpfades (T) transportiert, mit wenigstens einem Heizelement (4), welches entlang des Transportpfades (T) der Kunststoffvorformlinge (10) angeordnet ist und welches die Kunststoffvorformlinge (10) erwärmt, wobei weiterhin eine Kühleinrichtung vorgesehen ist, welche die Kunststoffvorformlinge (10) und/ oder wenigstens ein Element der Vorrichtung (1) während der Erwärmung der Kunststoffvorformlinge (10) durch Beaufschlagung mit einem gasförmigen Medium kühlt,
**dadurch gekennzeichnet, dass**
ein Strömungspfad des gasförmigen Mediums veränderbar ist, derart, dass es in einer ersten vorgegebenen Weise bezüglich der Außenoberfläche der Kunststoffvorformlinge (10) während deren Erwärmung führbar ist und es in einer zweiten vorgegebenen Weise, welche sich von der ersten vorgegebenen Weise unterscheidet, bezüglich der Außenoberfläche der Kunststoffvorformlinge (10) führbar ist, wobei sich die erste und die zweite vorgegebene Weise zumindest hinsichtlich des auf die Außenoberfläche der Kunststoffvorformlinge gelangenden Volumenstroms unterscheiden, wobei eine Veränderung derart möglich ist, dass in wenigstens einem Zustand ein Auftreffen von Gas bzw. Luft auf die Außenoberfläche der Kunststoffvorformlinge vollständig verhindert werden kann.

2. Vorrichtung (1) nach Anspruch 1,
**dadurch gekennzeichnet, dass**
die Vorrichtung (1) ein Strömungsleitelement (18) zum Leiten der Gasströmung aufweist und durch eine Relativbewegung dieses Strömungsleitelements (18) gegenüber dem Transportpfad der Kunststoffvorformlinge (10) eine Umstellung zwischen der ersten vorgegebenen Weise und der zweiten vorgegebenen Weise möglich ist.

3. Vorrichtung (1) nach Anspruch 2,
**dadurch gekennzeichnet, dass**
die Vorrichtung einen Erwärmungskanal (20) aufweist, durch den hindurch die Kunststoffvorformlinge (10) transportiert werden.

4. Vorrichtung (1) nach Anspruch 2,
**dadurch gekennzeichnet, dass**
die Vorrichtung Erwärmungselemente (14) aufweist, welche die Kunststoffvorformlinge erwärmen und das Strömungsleitelement (18) derart angeordnet ist, dass die Kunststoffvorformlinge (10) wenigstens abschnittsweise zwischen den Erwärmungselementen (14) und dem Strömungsleitelement (18) transportiert werden.

5. Vorrichtung (1) nach Anspruch 1
**dadurch gekennzeichnet, dass**
die Vorrichtung (1) ein erstes Reflektorelement (16) aufweist und die Kunststoffvorformlinge (10) zwischen den Erwärmungselementen (14) und dem ersten Reflektorelement (16) transportiert werden.

6. Vorrichtung (1) nach Anspruch 5,
**dadurch gekennzeichnet, dass**
das erste Reflektorelement (16) von dem gasförmigen Medium gekühlt wird.

7. Vorrichtung (1) nach Anspruch 2
**dadurch gekennzeichnet, dass**
das Strömungsleitelement in wenigstens einer Stellung in einer Längsrichtung (L) den Kühlstrom für die Kunststoffvorformlinge (10) leitet.

8. Vorrichtung (1) nach Anspruch 2,
**dadurch gekennzeichnet, dass**
das Strömungsleitelement an wenigstens einer Oberfläche derart ausgebildet ist, dass es infrarotes Licht mit einer Wellenlänge von mehr als 900nm zu wenigstens 20%, bevorzugt zu wenisgtens 40%, bevorzugt zu wenigstens 60% reflektiert.

9. Vorrichtung nach Anspruch 5,
dadurch gekenzeichnet, dass
das gasförmige Kühlmedium durch eine Querschnittsfläche des ersten Reflektorelements (16) hindurchdritt.

10. Verfahren zum Erwärmen von Kunststoffvorformlingen (10), wobei die Kunststoffvorformlinge mit einer Transporteinrichtung (2) entlang eines vorgegebenen Transportpfades (T) transportiert werden und mit wenigstens einem Heizelement (4), welches entlang des Transportpfades (T) der Kunststoffvorformlinge (10) angeordnet ist, erwärmt werden und weiterhin eine Kühleinrichtung vorgesehen ist, welche die Kunststoffvorformlinge (10) und/ oder wenigstens ein Element der Vorrichtung (1) während der Erwärmung der Kunststoffvorformlinge (10) durch Beaufschlagung mit einem gasförmigen Medium kühlt,
**dadurch gekennzeichnet, dass**
ein Strömungspfad des gasförmigen Mediums verändert wird, derart, dass es in einer ersten vorgegebenen Weise bezüglich der Außenoberfläche der Kunststoffvorformlinge (10) während deren Erwärmung geführt wird und es in einer zweiten vorgegebenen Weise, welche sich von der ersten vorgegebenen Weise unterscheidet, bezüglich der Außenoberfläche der Kunststoffvorformlinge (10) geführt wird, wobei sich die erste und die zweite vorgegebene Weise zumindest hinsichtlich des auf die Außenoberfläche der Kunststoffvorformlinge (10) gelangenden Volumenstroms unterscheiden, wobei eine Veränderung derart möglich ist, dass in wenigstens einem Zustand ein Auftreffen von Gas bzw. Luft auf die Außenoberfläche der Kunststoffvorformlinge im Wesentlichen vollständig verhindert werden kann.

## Claims

1. An apparatus (1) for the heating of plastics material pre-forms (10) with a conveying device (2) which conveys the plastics material pre-forms (10) along a pre-set conveying path (T), with at least one heating element (4) which is arranged along the conveying path (T) of the plastics material pre-forms (10) and which heats the plastics material pre-forms (10), wherein in addition a cooling device is provided which cools the plastics material pre-forms (10) and/ or at least one element of the apparatus (1) during the heating of the plastics material pre-forms (10) by acting upon them with a gaseous medium, **characterized in that** a flow path of the gaseous medium is capable of being changed in such a way that in a first pre-set manner it is capable of being conveyed with respect to the outer surface of the plastics material pre-forms (10) during the heating thereof and in a second pre-set manner, which differs from the first pre-set manner, it is capable of being conveyed with respect to the outer surface of the plastics material pre-forms (10), wherein the first and second pre-set manners differ at least with respect to the volume flow arriving at the outer surface of the plastics material pre-forms, wherein a change-over is possible in such a manner that in at least one state a striking of gas or air respectively onto the outer surface of the plastics material preforms can be entirely prevented.

2. An apparatus (1) according to claim 1, **characterized in that** the apparatus (1) has a flow guide element (18) for guiding the gas flow, and as a result of a relative movement of this flow guide element (18) with respect to the conveying path of the plastics material pre-forms (10) a change-over between the first pre-set manner and the second pre-set manner is possible.

3. An apparatus (1) according to claim 2, **characterized in that** the apparatus has a heating channel (20) through which the plastics material pre-forms (10) are conveyed.

4. An apparatus (1) according to claim 2, **characterized in that** the apparatus has heating elements (14) which heat the plastics material pre-forms, and the flow guide element (18) is arranged in such a way that the plastics material preforms (10) are conveyed at least in sections between the heating elements (14) and the flow guide element (18).

5. An apparatus (1) according to claim 1, **characterized in that** the apparatus (1) has a first reflector element (16) and the plastics material pre-forms (10) are conveyed between the heating elements (14) and the first reflector element (16).

6. An apparatus (1) according to claim 5, **characterized in that** the first reflector element (16) is cooled by the gaseous medium.

7. An apparatus (1) according to claim 2, **characterized in that** the flow guide element guides the cooling flow for the plastics material pre-forms (10) in at least one setting in a longitudinal direction (L).

8. An apparatus (1) according to claim 2, **characterized in that** the flow guide element is formed on at least one surface in such a way that it reflects infrared light with a wavelength of more than 900 nm by at least 20 %, preferably by at least 40 %, and preferably by at least 60 %.

9. An apparatus according to claim 5, **characterized in that** the gaseous cooling medium passes through a cross-sectional area of the first reflector element (16).

10. A method of heating plastics material pre-forms (10), wherein the plastics material pre-forms are conveyed by a conveying device (2) along a pre-set conveying path (T) and are heated by at least one heating element (4) which is arranged along the conveying path (T) of the plastics material pre-forms (10), and in addition a cooling device is provided which cools the plastics material pre-forms (10) and/or at least one element of the apparatus (1) by acting upon them or it with a gaseous medium during the heating of plastics material preforms (10), **characterized in that** a flow path of the gaseous medium is changed in such a way that it is guided in a first pre-set manner with respect to the outer surface of the plastics material pre-forms (10) during the heating thereof and it is guided in a second pre-set manner - which is different from the first pre-set manner - with respect to the outer surface of the plastics material pre-forms (10), wherein the first pre-set manner and the second pre-set manner differ at least with respect to the volume flow which reaches the outer surface of the plastics material pre-forms (10), wherein a change-over is possible in such a manner, that in at least one state a striking of gas or air respectively onto the outer surface of the plastics material preforms can be substantially entirely prevented.

## Revendications

1. Installation (1) pour le chauffage de préformes en matière plastique (10), avec un dispositif de transport (2) convoyant les préformes en matière plastique (10) le long d'un chemin de transport (T) pré-défini, avec au moins un élément chauffant (4) disposé le long du chemin de transport (T) des préformes en matière plastique (10) et chauffant les préformes en matière plastique (10), un dispositif de refroidissement étant en outre prévu, lequel refroidit les préformes en matière plastique (10) et/ou au moins un élément de l'installation (1) pendant le chauffage des préformes en matière plastique (10) en les soumettant à l'action d'un fluide gazeux,
**caractérisée en ce**
**qu'**un chemin d'écoulement du fluide gazeux peut être modifié, de telle manière que celui-ci puisse être conduit suivant une première manière définie par rapport à la surface extérieure des préformes en matière plastique (10) pendant leur chauffage, et suivant une deuxième manière définie distincte de la première manière définie par rapport à la surface extérieure des préformes en matière plastique (10), la première et la deuxième manières définies se distinguant au moins pour ce qui est du débit volumique incident sur la surface extérieure des préformes en matière plastique, une modification étant possible en ce que dans au moins un état, une incidence de gaz ou d'air respectivement peut être totalement empêchée sur la surface extérieure des préformes en matière plastique.

2. Installation (1) selon la revendication 1,
**caractérisée en ce que**
l'installation (1) comporte un élément déflecteur de flux (18) pour le guidage du flux gazeux et **en ce qu'**une commutation entre la première manière définie et la deuxième manière définie est rendue possible par déplacement relatif de cet élément déflecteur de flux (18) par rapport au chemin de transport des préformes en matière plastique (10).

3. Installation (1) selon la revendication 2,
**caractérisée en ce que**
l'installation comporte un canal de chauffage (20) par lequel les préformes en matière plastique (10) sont convoyées.

4. Installation (1) selon la revendication 2,
**caractérisée en ce que**
l'installation comporte des éléments de chauffage (14) qui chauffent les préformes en matière plastique, et **en ce que** l'élément déflecteur de flux (18) est disposé de telle manière que les préformes en matière plastique (10) sont au moins en sections convoyées entre les éléments de chauffage (14) et l'élément déflecteur de flux (18).

5. Installation (1) selon la revendication 1,
**caractérisée en ce que**
l'installation (1) comporte un premier élément réflecteur (16) et **en ce que** les préformes en matière plastique (10) sont convoyées entre les éléments de chauffage (14) et le premier élément réflecteur (16).

6. Installation (1) selon la revendication 5,
**caractérisée en ce que**
le premier élément réflecteur (16) est refroidi par le fluide gazeux.

7. Installation (1) selon la revendication 2,
**caractérisée en ce que**
l'élément déflecteur de flux guide le flux de refroidissement pour les préformes en matière plastique (10) dans au moins une position dans une direction longitudinale (L).

8. Installation (1) selon la revendication 2,
**caractérisée en ce que**
l'élément déflecteur de flux est réalisé sur au moins une surface de manière à réfléchir pour au moins 20 %, avantageusement pour au moins 40 %, préférentiellement pour au moins 60 %, une lumière infrarouge ayant une longueur d'onde supérieure à 900nm.

9. Installation selon la revendication 5,
**caractérisée en ce que**
le fluide de refroidissement gazeux traverse une surface de section transversale du premier élément réflecteur (16).

10. Procédé de chauffage de préformes en matière plastique (10), dans lequel les préformes en matière plastique sont convoyées par un dispositif de transport (2) le long d'un chemin de transport (T) défini et chauffées par au moins un élément chauffant (4) disposé le long du chemin de transport (T) des préformes en matière plastique (10), et dans lequel un dispositif de refroidissement est en outre prévu, lequel refroidit les préformes en matière plastique (10) et/ ou au moins un élément de l'installation (1) pendant le chauffage des préformes en matière plastique (10) en les soumettant à l'action d'un fluide gazeux,
**caractérisé en ce qu'**
un chemin d'écoulement du fluide gazeux est modifié de telle manière que celui-ci soit conduit suivant une première manière définie par rapport à la surface extérieure des préformes en matière plastique (10) pendant leur chauffage, et suivant une deuxième manière définie distincte de la première manière définie par rapport à la surface extérieure des préformes en matière plastique (10), la première et la deuxième manières définies se distinguant au moins pour ce qui est du débit volumique incident sur la surface extérieure des préformes en matière plastique (10), une modification étant possible **en ce que** dans au moins un état, une incidence de gaz ou d'air respectivement peut être sensiblement totalement empêchée sur la surface extérieure des préformes en matière plastique.
